# EUROPÄISCHE PATENTSCHRIFT

(11) **EP 2 028 296 B1**
(45) Veröffentlichungstag und Bekanntmachung des Hinweises auf die Patenterteilung: **22.02.2012**
(21) Anmeldenummer: 07016607.9
(22) Anmeldetag: 24.08.2007
(51) Int. Cl.: D01D 5/098, D01D 5/088

(54) **Verfahren zur Herstellung von synthetischen Filamenten aus einem Kunststoffblend**
Method for manufacturing synthetic filaments from a polymer blend
Procédé de fabrication de filaments synthétiques d'un mélange de polymères

(43) Veröffentlichungstag der Anmeldung: 25.02.2009
(73) Patentinhaber: Reifenhäuser GmbH & Co. KG Maschinenfabrik, 53839 Troisdorf (DE)
(72) Erfinder: Schlag, Hans-Peter, 53944 Troisdorf (DE); Sommer, Sebastian, 53844 Troisdorf (DE); Frey, Detlef, 53859 Niederkassel (DE)
(74) Vertreter: Rohmann, Michael

(56) Entgegenhaltungen:
- EP-A- 1 609 890
- EP-A- 1 630 265
- US-A- 5 629 080
- US-A1- 2005 165 173

## Beschreibung

Die Erfindung betrifft ein Verfahren zur Herstellung von Spinnvliesen aus Kunststoff-Endlosfilamenten aus thermoplastischem Kunststoff. - Kunststoff-Blend meint im Rahmen der Erfindung eine Kunststoffmischung bzw. Kunststofflegierung aus zumindest zwei Kunststoffen mit unterschiedlichen Eigenschaften und insbesondere eine homogene Mischung aus diesen Kunststoffen.

Maßnahmen bzw. Verfahren zur Herstellung von Kunststoff-Filamenten sind aus der Praxis in verschiedenen Ausführungsvarianten bekannt. Die Kunststoff-Filamente werden zunächst extrudiert, anschließend abgekühlt, darauf hin verstreckt und vorzugsweise auf einer Ablage zu einem Spinnvlies abgelegt. Die Verstreckung erfolgt zweckmäßigerweise pneumatisch. Es ist insbesondere bekannt auf diese Weise Kunststoff-Filamente aus Polypropylen herzustellen. Ein Problem liegt darin, dass beim Spinnen bzw. beim Extrudieren und bei der pneumatischen Verstreckung der Filamente die Filamentgeschwindigkeit nicht beliebig gesteigert werden kann. Nach einem anfänglichen Anstieg der Filamentgeschwindigkeit über die Steuerung der Temperatur und der Verstreckbedingungen erreicht die Filamentgeschwindigkeit in der Regel eine Grenze, die es normalerweise nicht ermöglicht Polypropylen-Filamente mit einem Filamentdurchmesser kleiner bzw. deutlich kleiner als 1,11 dtex (1,0 den) zu erzeugen. Das gilt insbesondere auch für das bekannte Reicofil-Verfahren bzw. Reicofil IV-Verfahren zur Herstellung von Polypropylen-Filamenten. Dabei ist es wesentlich, dass die Filamente produktionssicher verstreckt werden. Produktionssichere Verstreckung meint hier eine Verstreckung, die keine oder nur geringfügige Spinnstörungen zur Folge hat.

Aus EP-A-1 609 890 sind Polypropylenfasern aus zwei unterschiedlichen Polypropylenen mit verschiedenen Schmelzflussraten bekannt. Entsprechend den in diesem Dokument aufgeführten Beispielen weist das erste Polypropylen eine Schmelzflussrate von 26 g/10 Min. oder eine Schmelzflussrate deutlich unter 20 g/10 Min. auf. Im Übrigen wird in diesem Dokument nichts Konkretes über die Erzeugung und Behandlung der Polypropylenfasern beschrieben.

Auch in US-A-5 629 080 sind Polypropylenfasern aus zwei unterschiedlichen Polypropylenen mit verschiedenen Schmelzflussraten offenbart. Für das erste Polypropylen wird zunächst ganz allgemein ein weiter Bereich der Schmelzflussrate von 0,5 bis 30 genannt. Weiterhin wird hier für das erste Polypropylen ein bevorzugter Schmelzflussratenbereich von 0,5 bis 5, sehr bevorzugt von 0,8 bis 5 und besonders bevorzugt von 1,0 bis 3,0 angegeben. Die hier beschriebenen Polypropylenfasern können Filamente oder Stapelfasern sein. Am Rande wird ein Kühlen und Ziehen der Fasern erwähnt, allerdings eher im Zusammenhang mit der Herstellung von Stapelfasern.

Demgegenüber liegt der Erfindung das technische Problem zugrunde, ein Verfahren anzugeben, mit dem Polypropylen-Endlosfilamente mit Filamentdurchmessern deutlich kleiner 1,11 dtex (1,0 den) einfach erzeugt werden können. Der Erfindung liegt insbesondere das technische Problem zugrunde, solche Kunststoff-Filamente mit dem weiter unten noch erläuterten Reicofil-Verfahren bzw. Reicofil IV-Verfahren herzustellen.

Zur Lösung dieses technischen Problems lehrt die Erfindung ein Verfahren zur Herstellung von Spinnvliesen aus Kunststoff-Endlosfilamenten aus thermoplastischem Kunststoff,
wobei die Endlosfilamente aus einem Kunststoff-Blend hergestellt werden, welches Kunststoff-Blend ein erstes Polypropylen mit einem Schmelzflussindex (MFI) von 20 bis 70 g/10 Min. und ein zweites Polypropylen mit einem Schmelzflussindex (MFI) von 300 bis 3.000 g/10 Min. enthält,

wobei die Endlosfilamente aus einer Spinndüse extrudiert werden, wobei die Endlosfilamente anschließend in einer Kühlkammer durch Zuführung von Kühlluft gekühlt werden und daraufhin in einer Verstreckeinheit aerodynamisch verstreckt werden und wobei in das Aggregat aus Kühlkammer und Verstreckeinheit außer der Zuführung der Kühlluft keine weitere Luft von außen zugeführt wird,
wobei die Verstreckbedingungen bei der aerodynamischen Verstreckung mit der Maßgabe eingestellt werden, dass Endlosfilamente mit einem Titer kleiner 0,89 dtex (0,8 den) erhalten werden und
wobei die Endlosfilamente nach der aerodynamischen Verstreckung auf einer Ablage zu einem Spinnvlies abgelegt werden. - Der Schmelzflussindex (MFI) wird im Rahmen der Erfindung nach EN ISO 1133 bei einer Prüftemperatur von 230° C und bei einer Nennmasse von 2,16 kg gemessen.

Es liegt im Rahmen der Erfindung, dass das erfindungsgemäß eingesetzte Kunststoff-Blend lediglich die beiden Polypropylene (erstes und zweites Polypropylen) als Kunststoffbestandteile aufweist. Es liegt fernerhin im Rahmen der Erfindung, dass das Kunststoff-Blend neben den zumindest zwei Polypropylenen übliche Kunststoffzusätze enthält. Die Erfindung umfasst auch eine Ausführungsform, bei der neben den beiden Polypropylenen zumindest ein weiteres Polymer in dem Kunststoff-Blend enthalten ist. Eine besonders bevorzugte Ausführungsform der Erfindung ist dadurch gekennzeichnet, dass der Kunststoffanteil des ersten und des zweiten Polypropylens in dem Kunststoff-Blend insgesamt mehr als 90 Gew.-%, vorzugsweise mehr als 95 Gew.-% und bevorzugt mehr als 98 Gew.-% beträgt.

Nach sehr empfohlener Ausführungsform der Erfindung weist das erste Polypropylen einen Schmelzflussindex von 20 bis 35 g/10 Min. auf. Es empfiehlt sich weiterhin, dass das zweite Polypropylen einen Schmelzflussindex von 300 bis 1.600 g/10 Min. zweckmäßigerweise von 350 bis 1.550 g/10 Min. und vorzugsweise von 400 bis 1.500 g/10 Min. aufweist. Erfindungsgemäß ist dabei der Schmelzflussindex des ersten Polypropylens kleiner als der Schmelzflussindex des zweiten Polypropylens.

Es liegt im Rahmen der Erfindung, dass zumindest das zweite Polypropylen mit Hilfe eines Ziegler-Natta-Katalysators und/oder mit Hilfe eines Metallocen-Katalysators hergestellt ist. Das zweite Polypropylen und/oder das erste Polypropylen kann als Homopolymer oder Copolymer synthetisiert werden. Nach einer besonderen Ausführungsform der Erfindung wird ein mit zumindest einem Ziegler-Natta-Katalysator und/oder mit zumindest einem Metallocen-Katalysator hergestelltes Polypropylen mit zumindest einem Peroxid zwecks Erzeugung des zweiten Polypropylens gemischt bzw. zur Einstellung des Schmelzflussindex des zweiten Polypropylens gemischt. Die Einstellung des Schmelzflussindex des zweiten Polypropylens erfolgt dabei durch Kettenabbau mit Hilfe des zumindest einen Peroxids. Auf diese Weise können insbesondere Schmelzflussindizes größer als 400 g/10 Min. hergestellt werden. Die Erzeugung des zweiten Polypropylens aus dem genannten Polypropylen und dem zumindest einen Peroxid erfolgt zweckmäßigerweise in einem Extruder.

Gemäß einer empfohlenen Ausführungsform der Erfindung ist das zweite Polypropylen (mit dem höheren Schmelzflussindex) zu 0,1 bis 50 Gew.-%, vorzugsweise zu 0,5 bis 20 Gew.-%, zweckmäßigerweise zu 0,5 bis 15 Gew.-% und bevorzugt zu 1 bis 10 Gew.-% in dem Kunststoff-Blend enthalten. Es liegt dabei im Rahmen der Erfindung, dass der Rest des Kunststoff-Blends aus dem ersten Polypropylen und ggf. Kunststoffzusätzen besteht.

Das erfindungsgemäß verwendete Kunststoff-Blend kann sowohl für Monokomponentenflamente als auch für Bikomponentenfilamente bzw. Multikomponentenfilamente eingesetzt werden. Gemäß einer Ausführungsform der Erfindung ist das Kunststoff-Blend dabei in der ersten Komponente enthalten und die zweite Komponente bzw. die weiteren Komponenten bestehen aus einem anderem Kunststoff bzw. Polymer. Nach einer weiteren Ausführungsform der Erfindung ist in der ersten Komponente das Kunststoff-Blend enthalten und in der zweiten-Komponente bzw. in den weiteren Komponenten ist ebenfalls jeweils das Kunststoff-Blend enthalten, das sich jedoch von dem Kunststoff-Blend der ersten Komponente unterscheidet.

Es liegt im Rahmen der Erfindung, dass Kunststoff-Filamente mit einem Titer von kleiner 0,89 dtex (0,8 den) und bevorzugt mit einem Titer von kleiner oder gleich 0,78 dtex (0,7 den) hergestellt werden. Es liegt dabei weiterhin im Rahmen der Erfindung, dass die Verstreckbedingungen entsprechend eingestellt werden. Der Erfindung liegt insoweit die Erkenntnis zugrunde, dass die Verstreckung der aus dem Kunststoff-Blend hergestellten Kunststoff-Filamente problemlos so durchgeführt werden kann, dass Filamente mit den vorgenannten Filamentdurchmessern bzw. Titern erzeugt werden können. Diese Titerwerte beziehen sich im Übrigen auf die auf einer Ablage abgelegten Filamente bzw. auf die zur Spinnvliesbahn abgelegten Filamente.

Erfindungsgemäß werden die Kunststoff-Filamente nach ihrer Extrusion aus der Spinndüse abgekühlt und anschließend verstreckt. Die Kunststoff-Filamente werden nach der Verstreckung auf einer Ablage abgelegt bzw. zu einem Spinnvlies auf einer Ablage abgelegt. Bei der Ablage handelt es sich empfohlenermaßen um ein kontinuierlich umlaufendes Ablegesiebband. Nach einer bevorzugten Ausführungsform der Erfindung ist zwischen einer Verstreckeinheit zur Verstreckung der Kunststoff-Filamente und der Ablage zumindest ein Diffusor zwischengeschaltet, durch den die Kunststoff-Filamente geführt werden.

Die erfindungsgemäß erzeugten Kunststoff-Filamente bestehen nach einer sehr bevorzugten Ausführungsform der Erfindung zu mehr als 90 Gew.-%, vorzugsweise zu mehr als 95 Gew.-%, bevorzugt zu mehr als 98 Gew.-% und sehr bevorzugt mindestens zu 99 Gew.-% aus dem erfindungsgemäßen Kunststoff-Blend.

Der Erfindung liegt die Erkenntnis zugrunde, dass mit einem erfindungsgemäß eingesetzten Kunststoff-Blend bzw. mit Kunststoff-Filamenten aus diesem Kunststoff-Blend die Filamentgeschwindigkeit nach dem Austreten aus der Spinndüse und die Spinnstabilität gegenüber den aus der Praxis bekannten Maßnahmen beachtlich gesteigert werden kann. Auf diese Weise können Filamente hoher Qualität mit Filamentdurchmessern von weniger als 0,89 dtex (0,8 den) erreicht werden. Hervorzuheben ist dabei, dass die geringen Filamentdurchmesser bzw. Titer durch relativ einfache und wenig aufwendige Maßnahmen erzielt werden können. Das erfindungsgemäße Verfahren kann mit verhältnismäßig geringen Kosten durchgeführt werden und nichtsdestoweniger werden beachtliche Vorteile insbesondere im Hinblick auf die Filamentgeschwindigkeit und die Filamentdurchmesser erreicht.

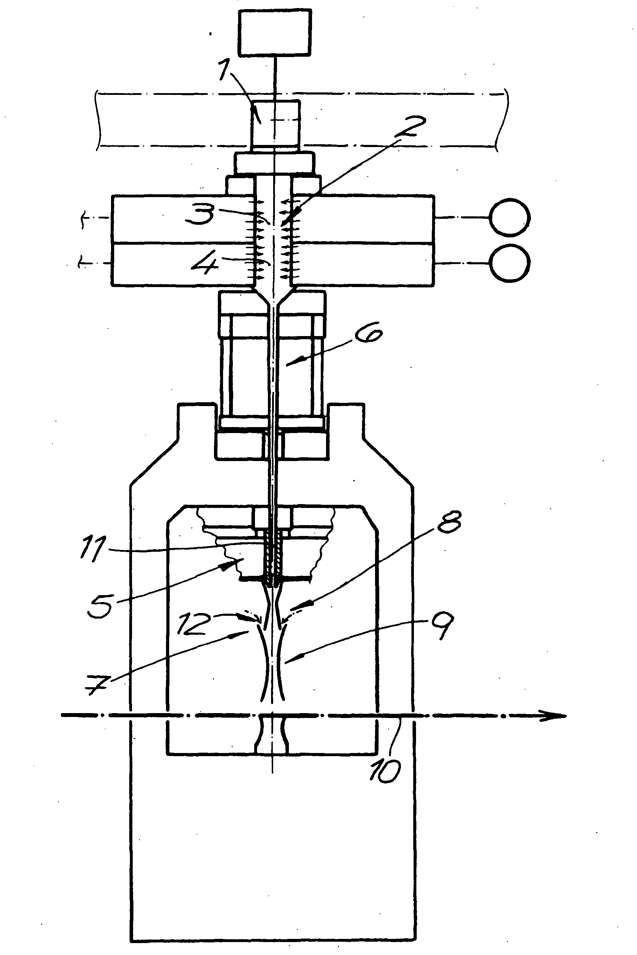

Nachfolgend wird die Erfindung anhand einer lediglich ein Ausführungsbeispiel darstellenden Zeichnung näher erläutert. Die einzige Figur zeigt einen Vertikalschnitt durch eine erfndungsgemäße Vorrichtung zur Herstellung der erfindungsgemäßen Kunststoff-Filamente.

Die in der Figur dargestellte Vorrichtung dient zur Herstellung von Spinnvliesen aus Kunststoff-Filamenten, die aus dem erfindungsgemäß eingesetzten Kunststoff-Blend bzw. im Wesentlichen aus dem erfindungsgemäß eingesetzten Kunststoff-Blend bestehen. Im Ausführungsbeispiel mag es sich um Monokomponentenfilamente handeln, die vollständig aus dem Kunststoff-Blend bestehen. Die Vorrichtung weist eine Spinnerette 1 zur Erzeugung bzw. zum Spinnen der Kunststoff-Filamente auf. Der Spinnerette 1 ist eine Kühlkammer 2 nachgeschaltet, in der die Kunststoff-Filamente mit zugeführter Prozessluft gekühlt werden. Die Kühlkammer 2 ist nach bevorzugter Ausführungsform und im Ausführungsbeispiel in zwei Kühlkammerabschnitte 3, 4 unterteilt, in denen die Kunststoff-Filamente jeweils mit Prozessluft unterschiedlicher Temperatur gekühlt werden. Eine bevorzugte Ausführungsform ist dadurch gekennzeichnet, dass die Temperatur der Prozessluft mit der die Kunststoff-Filamente in dem ersten oberen Kühlkammerabschnitt 3 beaufschlagt werden, höher ist als die Temperatur der Prozessluft mit der die Kunststoff-Filamente in dem zweiten unteren Kühlkammerabschnitt 4 beaufschlagt werden.

Im Anschluss an die Kühlkammer 2 ist eine Verstreckeinheit 5 vorgesehen, in der die Kunststoff-Filamente aus dem erfindungsgemäßen Kunststoff-Blend aerodynamisch verstreckt werden. Die Kühlkammer 2 ist im Ausführungsbeispiel über einen Zwischenkanal 6 mit der Verstreckeinheit 5 verbunden. Die Verstreckeinheit 5 weist im Übrigen einen Unterziehkanal 11 auf. Der Anschlussbereich zwischen Kühlkammer 2 und Verstreckeinheit 5 ist geschlossen ausgebildet. In diesem Übergangsbereich und insbesondere im Bereich des Zwischenkanals 6 wird keine Luft von außen in den Strömungsweg der Kunststoff-Filamente eingeführt. Gemäß einer empfohlenen Ausführungsform verläuft der Zwischenkanal 6 von der Kühlkammer 2 zur Verstreckeinheit 5 hin konvergierend. Bei dieser empfohlenen Ausführungsform verjüngt sich der Zwischenkanal 6 also von der Kühlkammer 2 zur Verstreckeinheit 5. Vorzugsweise und im Ausführungsbeispiel schließt an die Verstreckeinheit 5 eine Verlegeeinheit 7 an, die nach bevorzugter Ausführungsform zumindest einen Diffusor 8, 9 aufweist. Zweckmäßigerweise und im Ausführungsbeispiel besteht die Verlegeeinheit 11 aus einem ersten Diffusor 8 und einem zweiten Diffusor 9. Vorzugsweise und im Ausführungsbeispiel ist zwischen dem ersten Diffusor 8 und dem zweiten Diffusor 9 ein Umgebungslufteintrittsspalt 12 vorgesehen, Jeder Diffusor 8, 9 weist im Ausführungsbeispiel ein oberes konvergierende Teil sowie ein unteres divergierendes Teil auf. Dementsprechend hat jeder Diffusor 8, 9 eine engste Stelle zwischen dem oberen konvergierenden Teil und dem unteren divergierenden Teil. Vorzugsweise sind die Diffusorwände zumindest im divergierenden Teil des ersten Diffusors 8 und/oder des zweiten Diffusors 9 verstellbar, so dass der Öffnungswinkel des jeweiligen divergierenden Teils einstellbar ist.

Unterhalb der Verlegeeinheit 7 werden die Kunststoff-Filamente auf einer als Ablegesiebband 10 ausgebildeten Ablage zum Spinnvlies bzw. zur Spinnvliesbahn abgelegt. Unter dem Ablegesiebband 10 ist vorzugsweise zumindest eine in der Figur nicht näher dargestellte Saugeinrichtung vorgesehen. Mit dieser Saugeinrichtung wird während des Ablegens des Kunststoff-Filamente Luft durch das Ablegesiebband 10 gesaugt.

Mit der in der Figur dargestellten Vorrichtung wird nach dem Reicofil IV-Verfahren gearbeitet. Das Reicofil IV-Verfahren wird in EP 1 340 843 A1 beschrieben. Das erfindungsgemäß eingesetzte Kunststoff-Blend ist für das Reicofil IV-Verfahren besonders geeignet und nach diesem Verfahren können auf sehr einfache und problemlose Weise Kunststoff-Filamente mit sehr geringen Filamentdurchmessern kleiner als 0,89 dtex (0,8 den) erzeugt werden. Besondere Bedeutung kommt in diesem Zusammenhang auch dem erfindungsgemäßen Merkmal zu, dass im Bereich der Kühlkammer 2 und des Zwischenkanals 6 sowie insbesondere im Übergangsbereich zwischen Kühlkammer 2 und Zwischenkanal 6 keine Luftzufuhr von außen vorgesehen ist, abgesehen von der Zufuhr der Prozessluft bzw. Kühlluft zur Kühlung der Kunststoff-Filamente in der Kühlkammer 2. Man spricht hier von einem so genannten geschlossenen System. Erfindungsgemäß findet im gesamten Aggregat aus Kühlkammer 2 und Verstreckeinheit 5 abgesehen von der genannten Zuführung der Prozessluft bzw. Kühlluft keine weitere Luftzufuhr von außen statt.

## Patentansprüche

1. Verfahren zur Herstellung von Spinnvliesen aus Kunststoff-Endlosfilamenten aus thermoplastischem Kunststoff,
wobei die Endlosfilamente aus einem Kunststoff-Blend hergestellt werden, welches Kunststoff-Blend ein erstes Polypropylen mit einem Schmelzflussindex (MFI) von 20 bis 70 g/10 Min. und ein zweites Polypropylen mit einem Schmelzflussindex (MFI) von 300 bis 3.000 g/10 Min. enthält,
wobei die Endlosfilamente aus einer Spinndüse extrudiert werden, wobei die Endlosfilamente anschließend in einer Kühlkammer durch Zuführung von Kühlluft gekühlt werden und daraufhin in einer Verstreckeinheit aerodynamisch verstreckt werden und wobei in das Aggregat aus Kühlkammer und Verstreckeinheit außer der Zuführung der Kühlluft keine weitere Luft von außen zugeführt wird,
wobei die Verstreckbedingungen bei der aerodynamischen Verstreckung mit der Maßgabe eingestellt werden, dass Endlosfilamente mit einem Titer kleiner 0,89 dtex (0,8 den) erhalten werden und
wobei die Endlosfilamente nach der aerodynamischen Verstreckung auf einer Ablage zu einem Spinnvlies abgelegt werden.

2. Verfahren nach Anspruch 1, wobei der Kunststoffanteil des ersten und des zweiten Polypropylens in dem Kunststoff-Blend mehr als 90 Gew.-%, vorzugsweise mehr als 95 Gew.-% beträgt.

3. Verfahren nach einem der Ansprüche 1 oder 2, wobei das erste Polypropylen einen Schmelzflussindex von 20 bis 35 g/10 Min. aufweist.

4. Verfahren nach einem der Ansprüche 1 bis 3, wobei das zweite Polypropylen einen Schmelzflussindex von 300 bis 1.600 g/10 Min., vorzugsweise von 400 bis 1.500 g/10 Min. aufweist.

5. Verfahren nach einem der Ansprüche 1 bis 4, wobei das zweite Polypropylen mittels zumindest eines Ziegler-Natta-Katalysators und/oder mittels zumindest eines Metallocen-Katalysators hergestellt wird.

6. Verfahren nach einem der Ansprüche 1 bis 5, wobei das zweite Polypropylen zu 0,1 bis 50 Gew.-%, vorzugsweise zu 0,5 bis 20 Gew.-% und bevorzugt zu 1 bis 10 Gew.-% in dem Kunststoff-Blend enthalten ist.

7. Verfahren nach einem der Ansprüche 1 bis 6, wobei Endlosfilamente mit einem Titer von kleiner oder gleich 0,78 dtex (0,7 den) hergestellt werden.

8. Verfahren nach einem der Ansprüche 1 bis 7, wobei die Endlosfilamente nach ihrer Extrusion in eine Kühlkammer (2) eingeführt werden, die in zumindest zwei Kühlkammerabschnitte (3, 4) unterteilt ist, in denen die Endlosfilamente jeweils mit Prozessluft mit unterschiedlichem konvektiven Wärmeabfuhrvermögen in Kontakt kommen.

## Claims

1. A method for the manufacture of spunbonded fabrics of continuous plastic filaments of thermoplastic plastic, wherein
the continuous filaments are manufactured from a plastic blend, which plastic blend contains a first polypropylene with a melt flow index (MFI) of 20 to 70 g/10 min., and a second polypropylene with a melt flow index (MFI) of 300 to 3,000 g/10 min., wherein
the continuous filaments are extruded from a spinneret, wherein the continuous filaments are subsequently cooled in a cooling chamber by the supply of cooling air, and thereafter are aerodynamically drawn in a drawing unit, and wherein no further air is supplied from outside into the assembly of cooling chamber and drawing unit apart from the supply of the cooling air, wherein
the draw conditions during the aerodynamic drawing process are adjusted with the requirement that continuous filaments are obtained with a titer of less than 0.89 dtex (0.8 den), and wherein
the continuous filaments after the aerodynamic drawing process are deposited on a depositing rack to form a spunbonded fabric.

2. The method in accordance with Claim 1, wherein the plastic component of the first and the second polypropylene in the plastic blend amounts to more than 90 % by weight, preferably more than 95 % by weight.

3. The method in accordance with one of the Claims 1 or 2, wherein the first polypropylene has a melt flow index of 20 to 35 g/10 min.

4. The method in accordance with one of the Claims 1 to 3, wherein the second polypropylene has a melt flow index of 300 to 1,600 g/10 min., preferably of 400 to 1,500 g/10 min.

5. The method in accordance with one of the Claims 1 to 4, wherein the second polypropylene is manufactured by means of at least one Ziegler-Natta catalyst and/or by means of at least one metallocene catalyst.

6. The method in accordance with one of the Claims 1 to 5, wherein the second polypropylene is contained in the plastic blend to the extent of 0.1 to 50 % by weight, primarily to the extent of 0.5 to 20 % by weight, and preferably to the extent of 1 to 10 % by weight.

7. The method in accordance with one of the Claims 1 to 6, wherein continuous filaments are manufactured with a titer of less than or equal to 0.78 dtex (0.7 den).

8. The method in accordance with one of the Claims 1 to 7, wherein the continuous filaments after their extrusion are introduced into a cooling chamber (2), which is subdivided into at least two cooling chamber sections (3, 4), in which the continuous filaments in each case come into contact with process air with a different convective heat removal capability.

## Revendications

1. Procédé de fabrication de filés-liés en filaments continus de matière plastique faits de plastique thermoplastique,
les filaments continus étant fabriqués à partir d'un mélange de plastique, lequel mélange de plastique contient un premier polypropylène ayant un indice de matière fusée (MFI) de 20 à 70 g/10 min. et un second polypropylène ayant un indice de matière fusée (MFI) de 300 à 3 000 g/10 min.,
les filaments continus étant extrudés depuis une buse de filage, les filaments continus étant ensuite refroidis dans une chambre réfrigérante par apport d'air frais puis étirés aérodynamiquement dans une unité d'étirage et aucun autre air de l'extérieur n'étant acheminé dans l'agrégat formé de la chambre réfrigérante et de l'unité d'étirage en dehors de l'apport d'air réfrigérant,
les conditions d'étirage de l'étirage aérodynamique étant établies sous réserve que les filaments continus soient maintenus à un titre inférieur à 0,89 dtex (0,8 den) et
les filaments continus étant déposés après l'étirage aérodynamique sur un récepteur pour former un filé-lié.

2. Procédé selon la revendication 1, la teneur en plastique du premier et du second polypropylène étant supérieure à 90 % en poids, de préférence supérieure à 95 % en poids, dans le mélange de plastique.

3. Procédé selon une des revendications 1 ou 2, le premier polypropylène présentant un indice de matière fusée de 20 à 35 g/10 min.

4. Procédé selon une des revendications 1 à 3, le second polypropylène présentant un indice de matière fusée de 300 à 1 600 g/10 min., de préférence 400 à 1 500 g/10 min.

5. Procédé selon une des revendications 1 à 4, le second polypropylène étant produit au moyen d'au moins un catalyseur Ziegler-Natta et/ou au moyen d'au moins un catalyseur métallocène.

6. Procédé selon une des revendications 1 à 5, le second polypropylène étant contenu à raison de 0,1 à 50 % en poids, de préférence 0,5 à 20 % en poids et préférentiellement de 1 à 10 % en poids dans le mélange de plastique.

7. Procédé selon une des revendications 1 à 6, les filaments continus étant produits avec un titre inférieur ou égal à 0,78 dtex (0,7 den).

8. Procédé selon une des revendications 1 à 7, les filaments continus étant après leur extrusion introduits dans une chambre réfrigérante (2) qui se divise en au moins deux sections de chambre réfrigérante (3, 4) dans lesquelles les filaments continus viennent respectivement en contact avec de l'air de traitement à facultés convectives de dissipation thermique différentes.
